# EUROPEAN PATENT SPECIFICATION

(11) **EP 1 158 819 B1**
(45) Date of publication and mention of the grant of the patent: **26.07.2006**
(21) Application number: 01112633.1
(22) Date of filing: 28.05.2001
(51) Int. Cl.: H04Q 7/22, H04B 7/26

(54) **Mobile radio communications system and method of operating a mobile radio communication system**
Mobilfunkkommunikationssystem und Verfahren zum Betreiben eines Mobilfunkkommunikationssystems
Système de radiocommunication mobile et procédé pour la gestion d'un système de radiocommunication mobile

(30) Priority: 26.05.2000 GB 0012851
(43) Date of publication of application: 28.11.2001
(73) Proprietor: MOTOROLA, INC., Schaumburg, IL 60196 (US)
(72) Inventor: Chater-Lea,David John, Berks RG45 6HJ (GB)
(74) Representative: Treleven, Colin

(56) References cited:
- WO-A-98/34359
- GB-A- 2 277 232
- US-A- 5 235 615
- US-A- 5 509 016

## Description

### Field of the Invention

This invention relates to mobile communication systems.

### Background of the Invention

Mobile communication systems typically comprise mobile radios, which can both transmit and receive, together with infrastructure. The infrastructure is typically land-based, and can include base stations and switches. Mobile radios can communicate by way of the infrastructure both with other mobile radios and with fixed subscribers.

The mobile radios may take several forms. In a 'mobile telephone' system, the radios may comprise mobile- or portable telephones. In a digital GSM mobile telephone system, the mobile radios are referred to as 'Mobile stations' (MS). In a personal mobile radio (PMR) system, the radios may comprise two-way portable- or mobile radios. All of these radios are in fact normally transceivers, they can both transmit and receive radio signals. In the remaining description and claims, the term 'mobile radio' shall be intended to describe all these types of radio transceiver.

Typically, a transmitting mobile radio transmits digitally encoded signals through the atmosphere to a base station. The base station then directs the signals via, for example, the public switch telephone network to another base station, which then transmits signals through the atmosphere to a receiving mobile radio.

In such a digital radio system, speech delay can be a critical factor. Such delays can arise from a plurality of sources. These include for example vocoding, transmission delays through the network, and the need to adapt to framing sequences such as those present at an air interface. The 'adaption' here means converting data sent through the network into the correct format for transmitting in the pre-ordained frames of transmission protocol used by the base station. This also refers to waiting for a transmission slot in systems where the base station is time or frequency multiplexing its transmissions to different mobile radios. The framing sequences include for example TDMA framing, which is used in the TETRA system and other similar systems.

It is also common for the encoded speech signals to be transmitted as signal packets. In packet switched systems transmission delays can be of a variable nature. Such variable delays may be encountered in a fixed infrastructure that is carrying digital audio, particularly in a packet radio system. In this case, it is conventional to use a Just in Time Audio (JITA) algorithm for controlling the presentation of the transmitted packet to a transmission medium process or gateway that uses a fixed time reference.

An example illustrating the preceding paragraph would be a General Packet-switched Radio Service (GPRS) network. Speech or data signals from any source would be conveyed through the network as packets of data. These packets would all reach a base station of the network, which base station is in communication with the mobile radio to which the signals must be transmitted. The packets of data would be re-assembled into the speech or data signals at the base station. Then the signals would be broken up into data of suitable duration for inclusion in transmission frames. The precise design of these frames would depend on the format of radio transmission between the base station and mobile radio. In this example, the base station is the 'gateway' referred to above.

The JITA algorithm operates to delay a packet for transmission or passage through a gateway until an optimum time. This optimum time is set to be a compromise. The time needs to be as short as possible in order to provide the shortest delay achievable to the audio transmission service. This in turn minimises the delay perceived by a user of the mobile radio. However the optimum time also needs to accommodate, as far as possible, the greatest delay likely to be experienced by a packet passing through the infrastructure on its way to the gateway. The algorithm operates to ensure that in the majority of cases a packet is available for transmission from the base station to the mobile radio just in time for the next transmission opportunity. This transmission opportunity itself may be dictated by interface framing, vocoder framing, or some other mechanism.

The algorithm makes use of a buffer which has an adjustable length. Packets for transmission to the mobile radio are placed into the buffer for a short time prior to transmission. The algorithm operates to minimise the time for which packets are delayed in the buffer, whilst always retaining some data in the buffer ready for the next transmission opportunity. That is to say it attempts to avoid the occurrence of an 'underflow' situation, where no data is available for transmission at the time of occurrence of a transmission slot from the base station to the mobile radio.

Occasionally the transmission times through an infrastructure will increase so much that a delay occurs which is greater than that allowed for by the JITA algorithm, which adjusts the buffer. In this case, the buffer will assume an underflow situation so that no data will be available for the next transmission opportunity. In this case the algorithm may operate in such a way that no valid data is transmitted, or it may repeat the last valid frame of audio data. If the situation is a freak occurrence, the buffer length may remain unchanged. If the algorithm predicts that the increased delay is likely to occur on future packets, it will increase the buffering time for all future packets. The consequence of this is that the audio delay will increase by the increased buffering time, and the increased delay rises in increments corresponding to the time between transmission opportunities. In the case of a TETRA system, this is equivalent to 60 msec increments in the audio delay.

It has been found that in practice the JITA algorithm works well with clear or unencrypted audio. However, this algorithm does not work satisfactorily with end-to-end encrypted audio, where a synchronous stream cipher is employed to perform the encryption. This type of encryption generally relies upon a pseudo-random number to synchronise the encryption stream, which is incremented for subsequent frames (or bits) of audio. It makes use of a current synchronising number, sometimes known as a synchronising value or variable, SV, and this is transmitted periodically by the transmitting device to maintain the receiving device in synchronisation. In between the transmission of this synchronisation number, the receiving device maintains what is known as a 'flywheel'. A flywheel is a locally held count, for example in a base station. This operates to increment the receiver's synchronisation number locally so that it remains in step with the expected incrementing at the transmitting device.

If the JITA algorithm increases the delay of transmitted audio frames suddenly, because of a delay in the infrastructure, the consequence is that the receiving device loses synchronisation. For example, if the algorithm operates to insert a one frame delay in the transmission process, the receiving device will not be aware of this and will apply its locally generated synchronisation numbers that are one frame ahead of the actual received encrypted information. This mismatch of synchronisation will continue until the transmitting device next sends a synchronisation value. The problem may be compounded by algorithms in the receiving device which may await a number of transmitted synchronisation values before changing their locally used synchronisation value in order to cover the eventuality that received errors may have occurred.

For the time that such mismatch in values exists, the decryption process will fail and none of the transmitted information can be recovered. This is clearly not satisfactory. In the case of a change in delay having such adverse effects, the infrastructure cannot immediately transmit a revised synchronisation sequence as it does not know the content of the encrypted information stream. Knowledge of the information and its encryption and synchronisation is present only at the end user.

Attempts have been made to deal with this problem in two principal ways. In the first way, where the adjustable buffer underflows, the JITA algorithm is arranged to transmit no data and to assume that subsequent frames arrive in time. In such an arrangement each frame that in fact arrives late is dropped, and this impairs transmission quality.

In an alternative scheme, the system is designed to operate with longer buffers in end-to-end encrypted calls, but this has the effect of increasing audio delay unnecessarily for most calls. Both cases have the result that the audio transmission quality is degraded compared with non-encrypted transmission, either by delay or lost information. Neither is acceptable to subscribers for whom there is a desire to have end-to-end encrypted calls of a quality equivalent to that of non-encrypted calls.

The present invention has been developed to alleviate these problems.

Prior art arrangements are known from published patent applications GB-A-2339366, GB-A-2277232 and EP-A-0987848.

There are known in the art, e.g. described in US-A-5509016 and WO98/34359 A1, solutions that deal with delays in communication systems. However operation as in the invention now to be described is not disclosed or suggested in the prior art.

### Summary of the Invention

According to one aspect of the present invention there is provided a mobile communication system in accordance with appended claim 1.

According to another aspect of the present invention there is provided a method of operating a mobile communication system in accordance with appended claim 10.

According to another aspect of the present invention, there is provided a mobile radio transmitter in accordance with appended claim 19.

According to another aspect of the present invention, there is provided a mobile radio receiver in accordance with appended claim 25.

The invention facilitates a minimisation of synchronisation errors in a mobile radio communication system

The arrangements known from published patent applications GB-A-2339366, GB-A-2277232 and EP-A-0987848 provide corrections for absolute transmission time of a packet. In contrast, the present invention provides correction mechanisms for timing changes of the contents of the packet.

The arrangements known from published patent applications GB-A-2339366, GB-A-2277232 and EP-A-0987848 cause a change in timing of the source information, whether it is packet transmission within an infrastructure or timing of transmission across an air interface. The present invention, in contrast, specifically does not change the timing of the information. Instead, it may cause the transmitting party to retransmit synchronisation, i.e. the immediate state of the encryption engine, such that receiving parties can re-synchronise despite the change in delay. Alternatively, the invention provides information to the receiving parties that a delay has occurred, and leaves the task to the receiving parties to resynchronise themselves to the information in response to the change. The timing of the transmitted information is not changed.

### Brief Description of the Drawings

The invention will be described now by way of example only, with particular reference to the accompanying drawings. In the drawings:
Figure 1 is a schematic illustration of a mobile radio communication system;
Figure 2 is a flowchart illustrating the operation of a system in accordance with the present invention; and
Figures 3a and 3b illustrate how messages can be transmitted in the TETRA frame format.

### Description of Embodiments of the Invention

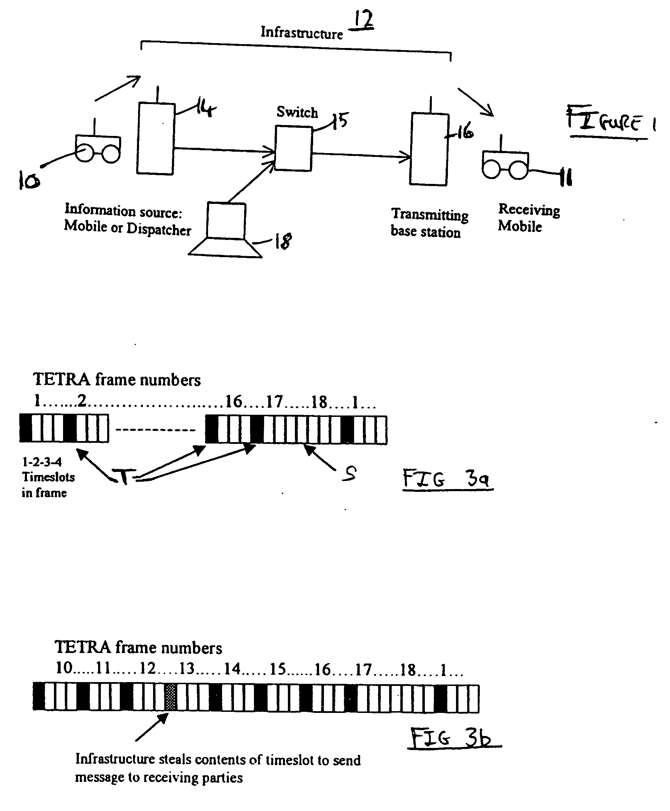

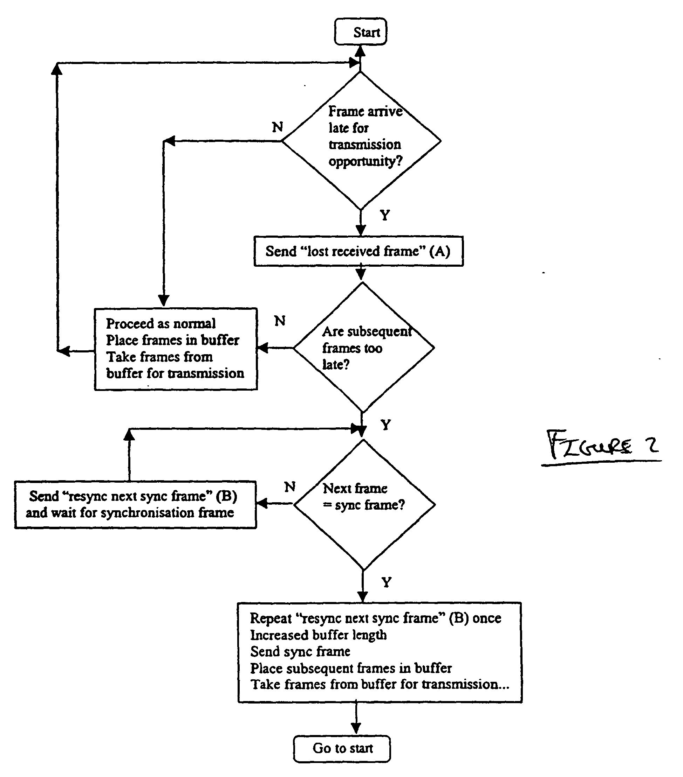

As shown in Figure 1, a mobile communication system includes a first mobile radio transmitter and receiver (10), which can communicate with another mobile radio transmitter and receiver (11), by way of an infrastructure. The infrastructure is shown generally at (12). This infrastructure includes a first base station (14), a switch or switches (15), and a second base station (16). The switch or switches (15) may typically be a privately operated data network or part of the public switched telephone network. The system can include what is known as a dispatcher (18).

In normal operation of the system of Figure 1, digitally encoded speech signals transmitted from the mobile radio (10) propagate to the base station (14) through the atmosphere. The base station (14) then transmits the data packets through the switch (15) to the base station (16). The base station (16) then transmits the speech data through the atmosphere to the receiving radio (11).

The system shown in Figure 1 operates the JITA algorithm in order to deal with delays which occur in the transmission process. This algorithm has been described in the introductory part of the specification and hence that description will not be repeated. In embodiments in accordance with the present invention, this algorithm is modified to operate as follows.

Where the infrastructure recognises a delay situation, it assembles a message for transmission to a receiving radio. This message serves to inform that receiving radio of the existence of a synchronisation error. The infrastructure also adds a step to the JITA algorithm to avoid any extra delay being introduced into the transmission stream until the next synchronisation sequence is available for transmission. The message can be introduced as a packet in place of a packet which normally contains audio data. The messages which can be transmitted are as follows:

In the case of messages for transmission to a receiving radio:
a) The message can indicate that a received frame has been lost.
b) The message can indicate that resynchronisation is required when the next synchronisation sequence is transmitted.
c) The message can indicate that there is an immediate synchronisation lag of N frames.

The infrastructure can assemble a message for transmission to the transmitting radio. In the case of messages sent to the transmitting radio, the message can be:
d) An instruction to send a new synchronisation sequence value.

The particular messages which are transmitted in any system will depend upon the nature of the system. For example, the type of message which can be transmitted can be dependent on the nature of the trust which exists between the end-to-end encryption users and the infrastructure carrying the end-to-end encrypted signals. In the case of messages a) and b) referred to above, these will typically be transmitted by an infrastructure in which there is in essence no trust. The messages c) and d) can be employed in situations where there is trust between users and the intervening infrastructure.

The following illustrates the manner in which these messages can be used.

### First Scenario

Where there is no trust between end users and the infrastructure, information which originates from a mobile radio (10) or a dispatcher (18) is vocoded, and then encrypted with the end-to-end encryption mechanism at the point of origin. Because of variations in delay through the infrastructure, the encrypted speech frames arrive at the transmitting base station (16) too late to be transmitted in the appropriate air interface frames. In this case the JITA algorithm is arranged to operate according to the flowchart shown in Figure 2 of the drawings.

The method of operation is as follows. A base station transmitting frames of information through the atmosphere to a mobile radio starts to receive frames from its connected landline which arrived too late for transmission at the appropriate time. The base station then transmits the message a) to the mobile radio, when the first frame arrives too late, to allow the decryption and decoding devices of that mobile radio to substitute some of the information for the lost frame.

If further frames arrive too late, then the base station can increase the delay prior to transmission of subsequent frames. It then signals to the mobile radio that that radio should resynchronise at the next resynchronisation frame, and reset its synchronisation flywheel using the message b) described above. This signalling is repeated each time a frame arrives too late until a resynchronisation frame is finally received. When this occurs the frame is transmitted to the mobile, which resynchronises with the delayed stream of data. After this time the mobile will correctly decrypt the audio signals and will be receiving a data stream sufficiently delayed to ensure that there is no further data lost.

### Second scenario

In a situation where there is trust between the end users at the infrastructure, messages c) and d) described above can be used as follows.

If frames of data start to arrive at the base station too late to be transmitted, the base station sends message c) to the receiving mobile radio to inform it that all future frames must be delayed, and that the mobile has to resynchronise by changing the values in its flywheel mechanism from this point onwards. The base station then inserts a delay in subsequent frames. This arrangement has the advantage, over the non-trust arrangement, that the delay can be included in frames sent to the receiving mobile radio at the earliest opportunity. Therefore less data is lost at the receiving mobile radio in between the moment at which frames start arriving too late and the arrival of the next synchronisation frame.

If the base station or other elements of the infrastructure have the ability to signal to the radio from which the encrypted speech is being transmitted once an excessive delay has been detected, that base station can signal back (signal d) to this point of origin. This enables the transmitting unit to immediately retransmit synchronisation values to receiving parties. The base station can therefore operate in accordance with the flow diagram shown in Figure 2. The base station therefore knows that resynchronisation is about to occur, so that the extent of information lost by the receiving mobile radio will be small.

Figures 3a and 3b illustrate how the messages can be transmitted to receiving radio parties in the TETRA frame format. Figure 3a shows a cycle of frames in a TETRA multiframe. This cycle provides 17 frames, each of four timeslots, which can carry traffic (i.e. encrypted calls), and an 18^{th} frame which carries signalling information only. The timeslots marked T represent transmission opportunities and the timeslot marked S represents a signalling opportunity.

In order to implement the embodiment described above the infrastructure will operate to send the required messages in one or more timeslots which normally carry the encrypted data. This is illustrated in Figure 3b, where frame 13 is being used to send a message to receiving parties.

The invention also comprises a mobile radio transmitter or mobile radio receiver, such as mobiles 10 and 11 in Figure 1.

The mobile radio transmitter or mobile radio receiver of the invention can communicate with one or more other mobile radio transmitters or receivers via the infrastructure 12. A message transmitted from a radio transmitter to a radio receiver is in the form of encrypted digitally encoded signals.

The mobile radio transmitter or receiver is adapted to receive a message assembled by the infrastructure for transmission to the mobile radio transmitter or mobile radio receiver, as explained above. The assembled message is sent in response to recognition of a signal delay condition, and contains information relating to the delay.

The encrypted digitally encoded signals may represent audio data, and the mobile radio transmitter or mobile radio receiver may transmit the encrypted digitally encoded signals as data packets.

The assembled message may be a data packet, transmitted in place of a packet or packets which usually contain encrypted digitally encoded audio data. The assembled message may:
(i) contain data indicating that a received frame has been lost, or
(ii) may contain data indicating that the radio receiver should carry out a resynchronisation on receipt of the next resynchronisation sequence; or
(iii) may contain data indicating that there is a synchronisation lag of N frames. Furthermore, the assembled message may contain data instructing the radio transmitter to send new synchronisation sequence values.

## Claims

1. A mobile communication system comprising one or more mobile radio transmitters and one or more mobile radio receivers (10, 11), wherein:
the mobile radio transmitters and mobile radio receivers (10, 11) are adapted to communicate with each other by way of an infrastructure (12), such as base stations (14, 16) and switching networks (15), messages transmitted between a mobile radio transmitter and a mobile radio receiver (10, 11) being in the form of encrypted digitally encoded signals; and
the infrastructure (12) is adapted to assemble a message for transmission to the transmitting or receiving radio (10, 11), in response to recognition of a signal delay condition within the network infrastructure (12), said message containing information relating to the delay.

2. A mobile communication system according to claim 1, wherein the encrypted digitally encoded signals represent audio data.

3. A mobile communication system according to claim 1 or claim 2, wherein the mobile radio transmitters are adapted to transmit the encrypted digitally encoded signals as data packets.

4. A mobile communication system according to claim 3, wherein the infrastructure (12) is adapted to transmit the assembled message as a packet, in place of a packet or packets which usually contain encrypted digitally encoded audio data.

5. A mobile communication system according to any preceding claim, wherein the infrastructure (12) is adapted to transmit the assembled message to a receiving or a transmitting radio (10, 11), and the assembled message contains data indicating that a received frame has been lost.

6. A mobile communication system according to any preceding claim, wherein the infrastructure (12) is adapted to transmit the assembled message to a radio receiver and the assembled message contains data indicating that the radio receiver should carry out a resynchronisation on receipt of the next resynchronisation sequence.

7. A mobile communication system according to any of claims 1-4, wherein the infrastructure (12) is adapted to transmit the assembled message to a radio receiver, and the assembled message contains data indicating that there is a synchronisation lag of N frames.

8. A mobile communication system according to any one of claims 1 to 4 or 7, wherein the infrastructure (12) is adapted to transmit the assembled message to a radio transmitter and the assembled message contains data instructing the radio transmitter to send new synchronisation sequence values.

9. A mobile communication system according to any preceding claim, adapted to carry out a Just in Time Audio algorithm for controlling onward transmission of data packets and wherein the assembly of the message comprises a step in said algorithm.

10. A method of operating a mobile communication system comprising one or more mobile radio transmitters and one or more mobile radio receivers (10, 11), whereby, in accordance with the method:
the one or more mobile radio transmitters and one or more mobile radio receivers (10, 11) can communicate with each other by way of an infrastructure (12), such as base stations (14, 16) and switching networks (15), messages transmitted between a mobile radio transmitter and a mobile radio receiver (10, 11) being in the form of encrypted digitally encoded signals; and
the infrastructure (12), in response to recognition of a signal delay condition within the network infrastructure (12), assembles a message for transmission to a radio transmitter or radio receiver, said message containing information relating to the delay.

11. A method according to claim 10, wherein the encrypted digitally encoded signals represent audio data.

12. A method according to claim 10 or claim 11, wherein the encrypted digitally encoded signals are transmitted as data packets.

13. A method according to claim 12, wherein the assembled message is transmitted as a packet, in place of a packet or packets which usually contain encrypted digitally encoded audio data.

14. A method according to any one of claims 10 to 13, wherein the assembled message is transmitted to a radio receiver, and contains data indicating that a received frame has been lost.

15. A method according to any one of claims 10 to 14, wherein the assembled message is transmitted to a radio receiver, and contains data indicating that the radio receiver should carry out a resynchronisation on receipt of the next resynchronisation sequence.

16. A method according to any one of claims 10 to 13, wherein the assembled message is transmitted to a radio receiver, and contains data indicating that there is a synchronisation lag of N frames.

17. A method according to any one of claims 10 to 13, or claim 16, wherein the, or a further, assembled message is transmitted to a radio transmitter, and contains data instructing the radio transmitter to send new synchronisation sequence values.

18. A method according to any one of claims 10 to 17, incorporating a Just in Time Audio algorithm for controlling onward transmission of data packets and wherein the assembly of the message comprises a step in said algorithm.

19. A mobile radio transmitter, wherein:
the mobile radio transmitter is adapted to communicate with one or more other mobile radio transmitters or receivers via an infrastructure (12), such as base stations (14, 16) and switching networks (15), a transmitted message being in the form of encrypted digitally encoded signals; and
the mobile radio transmitter is adapted to receive a message assembled by the infrastructure (12) for transmission to the mobile radio transmitter or mobile radio receiver, in response to recognition of a signal delay condition within the network infrastructure (12), said message containing information relating to the delay.

20. The mobile radio transmitter of claim 19, wherein the encrypted digitally encoded signals represent audio data.

21. The mobile radio transmitter of claim 19, wherein the mobile radio transmitter or mobile radio receiver is adapted to transmit the encrypted digitally encoded signals as data packets.

22. The mobile radio transmitter of claim 19 adapted to receive the assembled message, wherein the assembled message is a data packet, in place of a packet or packets which usually contain encrypted digitally encoded audio data.

23. The mobile radio transmitter of claim 19 adapted to receive the assembled message, wherein the assembled message contains data indicating that a received frame has been lost.

24. The mobile radio transmitter of any of claims 19-23 adapted to receive the assembled message, wherein the assembled message contains data instructing the radio transmitter to send new synchronisation sequence values.

25. A mobile radio receiver, wherein:
the mobile radio receiver is adapted to communicate with one or more other mobile radio transmitters or receivers via an infrastructure (12), such as base stations (14, 16) and switching networks (15), a transmitted message being in the form of encrypted digitally encoded signals; and
the mobile radio receiver is adapted to receive a message assembled by the infrastructure (12) for transmission to the mobile radio transmitter or mobile radio receiver, in response to recognition of a signal delay condition within the network infrastructure (12), said message containing information relating to the delay.

26. The mobile radio receiver of claim 25, wherein the encrypted digitally encoded signals represent audio data.

27. The mobile radio receiver of claim 25, wherein the mobile radio transmitter or mobile radio receiver is adapted to transmits the encrypted digitally encoded signals as data packets.

28. The mobile radio receiver of claim 25 adapted to receive the assembled message, wherein the assembled message is a data packet, in place of a packet or packets which usually contain encrypted digitally encoded audio data.

29. The mobile radio receiver of claim 25 adapted to receive the assembled message, wherein the assembled message contains data indicating that a received frame has been lost.

30. The mobile radio receiver of any of claims 25-29, adapted to receive the assembled message wherein the assembled message contains data indicating that the radio receiver should carry out a resynchronisation on receipt of the next resynchronisation sequence.

31. The mobile radio receiver of any of claims 25-29 adapted to receive the assembled message, wherein the assembled message contains data indicating that there is a synchronisation lag of N frames.

## Patentansprüche

1. Mobilkommunikationssystem mit einem oder mehreren mobilen Funksendern und einem oder mehreren mobilen Funkempfängern (10, 11), wobei:
die mobilen Funksender und die mobilen Funkempfänger (10, 11) geeignet sind, über eine Infrastruktur (12), wie zum Beispiel Basisstationen (14, 16) und Wählnetze (15), miteinander zu kommunizieren, wobei zwischen einem mobilen Funksender und einem mobilen Funkempfänger (10, 11) gesendete Nachrichten in der Form von verschlüsselten digitalcodierten Signalen vorliegen; und
die Infrastruktur (12) geeignet ist, in Reaktion auf das Erkennen eines Signalverzögerungszustands innerhalb der Netzinfrastruktur (12) eine Nachricht zum Senden zu dem sendenden oder empfangenden Funkgerät (10, 11) aufzubauen, wobei die Nachricht Information bezüglich der Verzögerung enthält.

2. Mobilkommunikationssystem nach Anspruch 1, wobei die verschlüsselten digitalcodierten Signale Audiodaten repräsentieren.

3. Mobilkommunikationssystem nach Anspruch 1 oder Anspruch 2, wobei die mobilen Funksender geeignet sind, die verschlüsselten digitalcodierten Signale als Datenpakete zu senden.

4. Mobilkommunikationssystem nach Anspruch 3, wobei die Infrastruktur (12) geeignet ist, die aufgebaute Nachricht als ein Paket zu senden, anstelle eines Pakets oder von Paketen, die normalerweise verschlüsselte digitalcodierte Audiodaten enthalten.

5. Mobilkommunikationssystem nach einem der vorhergehenden Ansprüche, wobei die Infrastruktur (12) geeignet ist, die aufgebaute Nachricht an ein empfangendes oder ein sendendes Funkgerät (10, 11) zu senden, wobei die aufgebaute Nachricht Daten enthält, die anzeigen, dass ein empfangener Rahmen verloren gegangen ist.

6. Mobilkommunikationssystem nach einem der vorhergehenden Ansprüche, wobei die Infrastruktur (12) geeignet ist, die aufgebauten Nachrichten an einen Funkempfänger zu senden und die aufgebaute Nachricht Daten enthält, die anzeigen, dass der Funkempfänger bei dem Empfang der nächsten Neusynchronisierungssequenz eine Neusynchronisierung ausführen sollte.

7. Mobilkommunikationssystem nach einem der Ansprüche 1 bis 4, wobei die Infrastruktur (12) geeignet ist, die aufgebaute Nachricht an einen Funkempfänger zu senden und die aufgebaute Nachricht Daten enthält, die anzeigen, dass eine Synchronisierungsverzögerung von N Rahmen vorliegt.

8. Mobilkommunikationssystem nach einem der Ansprüche 1 bis 4 oder 7, wobei die Infrastruktur (12) geeignet ist, die aufgebaute Nachricht an einen Funksender zu senden und die aufgebaute Nachricht Daten enthält, die den Funksender anweisen, neue Synchronisierungssequenzwerte zu senden.

9. Mobilkommunikationssystem nach einem der vorhergehenden Ansprüche, das geeignet ist, einen Just-in-time-Audio-Algorithmus zum Steuern des weiteren Sendens von Datenpaketen auszuführen und wobei der Aufbau der Nachricht einen Schritt in dem Algorithmus umfasst.

10. Verfahren zum Betreiben eines Mobilkommunikationssystems, mit einem oder mehreren mobilen Funksendern und einem oder mehreren mobilen Funkempfängern (10, 11), wobei gemäß dem Verfahren vorgesehen ist:
der eine oder die mehreren mobilen Funksender und der eine oder die mehreren mobilen Funkempfänger (10, 11) können miteinander über eine Infrastruktur (12), wie zum Beispiel Basisstationen (14, 16) und Wählnetze (15) kommunizieren, wobei Nachrichten, die zwischen einem mobilen Funksender und einem mobilen Funkempfänger (10, 11) gesendet werden in der Form von verschlüsselten digitalcodierten Signalen vorliegen; und
die Infrastruktur (12) baut in Reaktion auf das Erkennen eines Signalverzögerungszustands innerhalb der Netzstruktur (12) eine Nachricht zum Senden an einen Funksender oder Funkempfänger auf, wobei die Nachricht Information bezüglich der Verzögerung enthält.

11. Verfahren nach Anspruch 10, wobei die verschlüsselten digitalcodierten Signale Audiodaten repräsentieren.

12. Verfahren nach Anspruch 10 oder Anspruch 11, wobei die verschlüsselten digitalencodierten Signale als Datenpakete gesendet werden.

13. Verfahren nach Anspruch 12, wobei die aufgebaute Nachricht als ein Paket gesendet wird, anstelle eines Pakets oder von Paketen, die normalerweise verschlüsselte digitalcodierte Audiodaten enthalten.

14. Verfahren nach einem der Ansprüche 10 bis 13, wobei die aufgebaute Nachricht an einen Funkempfänger gesendet wird und Daten enthält, die anzeigen, dass ein empfangener Rahmen verloren gegangen ist.

15. Verfahren nach einem der Ansprüche 10 bis 14, wobei die aufgebaute Nachricht an einen Funkempfänger gesendet wird und Daten enthält, die anzeigen, dass der Funkempfänger bei dem Empfang der nächsten Neusynchronisierungssequenz eine Neusynchronisierung ausführen sollte.

16. Verfahren nach einem der Ansprüche 10 bis 13, wobei die aufgebaute Nachricht an einen Funkempfänger gesendet wird und Daten enthält, die anzeigen, dass eine Synchronisierungsverzögerung von N Rahmen vorliegt.

17. Verfahren nach einem der Ansprüche 10 bis 13 oder Anspruch 16, wobei die aufgebaute Nachricht oder eine weitere aufgebaute Nachricht an einen Funksender gesendet wird und Daten enthält, die den Funksender anweisen, neue Synchronisierungssequenzwerte zu senden.

18. Verfahren nach einem der Ansprüche 10 bis 17, das einen Just-in-time-Audio-Algorithmus zum Steuern des weiteren Sendens von Datenpaketen enthält und wobei der Aufbau der Nachricht einen Schritt in dem Algorithmus umfasst.

19. Mobiler Funksender, wobei:
der mobile Funksender geeignet ist, mit einem oder mehreren anderen mobilen Funksendern oder -empfängern über eine Infrastruktur (12), wie zum Beispiel Basisstationen (14, 16) und Wählnetze (15), zu kommunizieren, wobei eine gesendete Nachricht in der Form von verschlüsselten digitalcodierten Signalen vorliegt; und
der mobile Funksender geeignet ist, eine von der Infrastruktur (12) zum Senden an den mobilen Funksender oder den mobilen Funkempfänger aufgebaute Nachricht in Reaktion auf das Erkennen eines Signalverzögerungszustands innerhalb der Netzinfrastruktur (12) zu empfangen, wobei die Nachricht Information bezüglich der Verzögerung enthält.

20. Mobiler Funksender nach Anspruch 19, wobei die verschlüsselten digitalcodierten Signale Audiodaten repräsentieren.

21. Mobiler Funksender nach Anspruch 19, wobei der mobile Funksender oder der mobile Funkempfänger geeignet ist, die verschlüsselten digitalcodierten Signale als Datenpakete zu senden.

22. Mobiler Funksender nach Anspruch 19, der geeignet ist, die aufgebaute Nachricht zu empfangen, wobei die aufgebaute Nachricht ein Datenpaket ist, anstelle eines Pakets oder von Paketen, die normalerweise verschlüsselte digitalcodierte Audiodaten enthalten.

23. Mobiler Funksender nach Anspruch 19, der geeignet ist, die aufgebaute Nachricht zu empfangen, wobei die aufgebaute Nachricht Daten enthält, die anzeigen, dass ein empfangener Rahmen verloren gegangen ist.

24. Mobiler Funksender nach einem der Ansprüche 19 bis 23, der geeignet ist, die aufgebaute Nachricht zu empfangen, wobei die aufgebaute Nachricht Daten enthält, die den Funksender anweisen, neue Synchronisierungssequenzwerte zu senden.

25. Mobiler Funkempfänger, wobei:
der mobile Funkempfänger geeignet ist, mit einem oder mehreren mobilen Funksendern oder -empfängern über eine Infrastruktur (12), wie zum Beispiel Basisstationen (14, 16) und Wählnetze (15) zu kommunizieren, wobei eine gesendete Nachricht in der Form von verschlüsselten digitalcodierten Signalen vorliegt;
der mobile Funkempfänger geeignet ist, eine durch die Infrastruktur (12) zum Senden an den mobilen Funksender oder den mobilen Funkempfänger aufgebaute Nachricht in Reaktion auf das Erkennen eines Signalverzögerungszustands innerhalb der Netzinfrastruktur (12) zu empfangen, wobei die Nachricht Information bezüglich der Verzögerung enthält.

26. Mobiler Funkempfänger nach Anspruch 25, wobei die verschlüsselten digitalcodierten Signale Audiodaten repräsentieren.

27. Mobiler Funkempfänger nach Anspruch 25, wobei der mobile Funksender oder der mobile Funkempfänger geeignet ist, die verschlüsselten digitalcodierten Signale als Datenpaket zu senden.

28. Mobiler Funkempfänger nach Anspruch 25, der geeignet ist, die aufgebaute Nachricht zu empfangen, wobei die aufgebaute Nachricht ein Datenpaket ist, anstelle eines Pakets oder von Paketen, die normalerweise verschlüsselte digitalcodierte Audiodaten enthalten.

29. Mobiler Funkempfänger nach Anspruch 25, der geeignet ist, die aufgebaute Nachricht zu empfangen, wobei die aufgebaute Nachricht Daten enthält, die anzeigen, dass ein empfangener Rahmen verloren gegangen ist.

30. Mobiler Funkempfänger nach einem der Ansprüche 25 bis 29, der geeignet ist, die aufgebaute Nachricht zu empfangen, wobei die aufgebaute Nachricht Daten enthält, die anzeigen, dass der Funkempfänger bei dem Empfang der nächsten Neusynchronisierungssequenz eine Neusynchronisierung ausführen sollte.

31. Mobiler Funkempfänger nach einem der Ansprüche 25 bis 29, der geeignet ist, die aufgebaute Nachricht zu empfangen, wobei die aufgebaute Nachricht Daten enthält, die anzeigen, dass eine Synchronisationsverzögerung von N Rahmen vorliegt.

## Revendications

1. Système de communication mobile comprenant un ou plusieurs émetteurs radio mobiles et un ou plusieurs récepteurs radio mobiles (10, 11), dans lequel :
les émetteurs radio mobiles et les récepteurs radio mobiles (10, 11) sont conçus pour communiquer entre eux au moyen d'une infrastructure (12), telle que des stations de base (14, 16) et des réseaux de commutation (15), les messages transmis entre un émetteur radio mobile et un récepteur radio mobile (10, 11) se présentant sous la forme de signaux codés numériquement et cryptés ; et
l'infrastructure (12) est conçue pour assembler un message à transmettre à la radio émettrice ou réceptrice (10, 11), en réponse à la reconnaissance d'une condition de retard de signal dans l'infrastructure de réseau (12), ledit message contenant des informations concernant le retard.

2. Système de communication mobile selon la revendication 1, dans lequel les signaux codés numériquement et cryptés représentent des données audio.

3. Système de communication mobile selon la revendication 1 ou la revendication 2, dans lequel les émetteurs radio mobiles sont conçus pour transmettre les signaux codés numériquement et cryptés sous la forme de paquets de données.

4. Système de communication mobile selon la revendication 3, dans lequel l'infrastructure (12) est conçue pour transmettre le message assemblé sous la forme d'un paquet, à la place d'un ou plusieurs paquets qui contiennent habituellement des données audio codées numériquement et cryptées.

5. Système de communication mobile selon l'une quelconque des revendications précédentes, dans lequel l'infrastructure (12) est conçue pour transmettre le message assemblé à une radio réceptrice ou une radio émettrice (10, 11), et le message assemblé contient des données indiquant qu'une trame reçue a été perdue.

6. Système de communication mobile selon l'une quelconque des revendications précédentes, dans lequel l'infrastructure (12) est conçue pour transmettre le message assemblé à un récepteur radio, et le message assemblé contient des données indiquant que le récepteur radio devrait exécuter une resynchronisation lors de la réception de la séquence de resynchronisation suivante.

7. Système de communication mobile selon l'une quelconque des revendications 1 à 4, dans lequel l'infrastructure (12) est conçue pour transmettre le message assemblé à un récepteur radio, et le message assemblé contient des données indiquant qu'il y a un retard de synchronisation de N trames.

8. Système de communication mobile selon l'une quelconque des revendications 1 à 4 ou 7, dans lequel l'infrastructure (12) est conçue pour transmettre le message assemblé à un émetteur radio, et le message assemblé contient des données commandant à l'émetteur radio d'envoyer de nouvelles valeurs de séquence de synchronisation.

9. Système de communication mobile selon l'une quelconque des revendications précédentes, conçu pour exécuter un algorithme Juste à Temps Audio (JITA) pour commander une transmission vers l'avant de paquets de données, et dans lequel l'assemblage du message constitue une étape dudit algorithme.

10. Procédé d'exploitation d'un système de communication mobile comprenant un ou plusieurs émetteurs radio mobiles et un ou plusieurs récepteurs radio mobiles (10, 11), procédé grâce auquel :
le ou les émetteurs radio mobile et le ou les récepteurs radio mobile (10, 11) peuvent communiquer entre eux au moyen d'une infrastructure (12), telle que des stations de base (14, 16) et des réseaux de commutation (15), les messages transmis entre un émetteur radio mobile et un récepteur radio mobile (10, 11) se présentant sous la forme de signaux codés numériquement et cryptés ; et
l'infrastructure (12), en réponse à la reconnaissance d'une condition de retard de signal dans l'infrastructure de réseau (12), assemble un message à transmettre à un émetteur radio ou un récepteur radio, ledit message contenant des informations concernant le retard.

11. Procédé selon la revendication 10, dans lequel les signaux codés numériquement et cryptés représentent des données audio.

12. Procédé selon la revendication 10 ou la revendication 11, dans lequel les signaux codés numériquement et cryptés sont transmis sous la forme de paquets de données.

13. Procédé selon la revendication 12, dans lequel le message assemblé est transmis sous la forme d'un paquet, à la place d'un ou plusieurs paquets qui contiennent habituellement des données audio codées numériquement et cryptées.

14. Procédé selon l'une quelconque des revendications 10 à 13, dans lequel le message assemblé est transmis à un récepteur radio, et contient des données indiquant qu'une trame reçue a été perdue.

15. Procédé selon l'une quelconque des revendications 10 à 14, dans lequel le message assemblé est transmis à un récepteur radio, et contient des données indiquant que le récepteur radio devrait exécuter une resynchronisation lors de la réception de la séquence de resynchronisation suivante.

16. Procédé selon l'une quelconque des revendications 10 à 13, dans lequel le message assemblé est transmis à un récepteur radio, et contient des données indiquant qu'il y a un retard de synchronisation de N trames.

17. Procédé selon l'une quelconque des revendications 10 à 13, ou la revendication 16, dans lequel le message assemblé, ou un message assemblé supplémentaire, est transmis à un émetteur radio, et contient des données commandant à l'émetteur radio d'envoyer de nouvelles valeurs de séquence de synchronisation.

18. Procédé selon l'une quelconque des revendications 10 à 17, incorporant un algorithme Juste à Temps Audio (JITA) pour commander une transmission vers l'avant de paquets de données, et dans lequel l'assemblage du message constitue une étape dudit algorithme.

19. Emetteur radio mobile, dans lequel :
l'émetteur radio mobile est conçu pour communiquer avec un ou plusieurs autres émetteurs ou récepteurs radio mobiles, via une infrastructure (12), telle que des stations de base (14, 16) et des réseaux de commutation (15), un message transmis se présentant sous la forme de signaux codés numériquement et cryptés ; et
l'émetteur radio mobile est conçu pour recevoir un message assemblé par l'infrastructure (12) pour être transmis à l'émetteur radio mobile ou au récepteur radio mobile, en réponse à la reconnaissance d'une condition de retard de signal dans l'infrastructure de réseau (12), ledit message contenant des informations concernant le retard.

20. Emetteur radio mobile selon la revendication 19, dans lequel les signaux codés numériquement et cryptés représentent des données audio.

21. Emetteur radio mobile selon la revendication 19, dans lequel l'émetteur radio mobile ou le récepteur radio mobile est conçu pour transmettre les signaux codés numériquement et cryptés sous la forme de paquets de données.

22. Emetteur radio mobile selon la revendication 19, conçu pour recevoir le message assemblé, où le message assemblé est un paquet de données, à la place d'un ou plusieurs paquets qui contiennent habituellement des données audio codées numériquement et cryptées.

23. Emetteur radio mobile selon la revendication 19, conçu pour recevoir le message assemblé, où le message assemblé contient des données indiquant qu'une trame reçue a été perdue.

24. Emetteur radio mobile selon l'une quelconque des revendications 19 à 23, conçu pour recevoir le message assemblé, où le message assemblé contient des données commandant à l'émetteur radio d'envoyer de nouvelles valeurs de séquence de synchronisation.

25. Récepteur radio mobile, dans lequel :
le récepteur radio mobile est conçu pour communiquer avec un ou plusieurs autres émetteurs ou récepteurs radio mobiles, via une infrastructure (12), telle que des stations de base (14, 16) et des réseaux de commutation (15), un message transmis se présentant sous la forme de signaux codés numériquement et cryptés ; et
le récepteur radio mobile est conçu pour recevoir un message assemblé par l'infrastructure (12) pour être transmis à l'émetteur radio mobile ou au récepteur radio mobile, en réponse à la reconnaissance d'une condition de retard de signal dans l'infrastructure de réseau (12), ledit message contenant des informations concernant le retard.

26. Récepteur radio mobile selon la revendication 25, dans lequel les signaux codés numériquement et cryptés représentent des données audio.

27. Récepteur radio mobile selon la revendication 25, dans lequel l'émetteur radio mobile ou le récepteur radio mobile est conçu pour transmettre les signaux codés numériquement et cryptés sous la forme de paquets de données.

28. Récepteur radio mobile selon la revendication 25, conçu pour recevoir le message assemblé, où le message assemblé est un paquet de données, à la place d'un ou plusieurs paquets qui contiennent habituellement des données audio codées numériquement et cryptées.

29. Récepteur radio mobile selon la revendication 25, conçu pour recevoir le message assemblé, où le message assemblé contient des données indiquant qu'une trame reçue a été perdue.

30. Récepteur radio mobile selon l'une quelconque des revendications 25 à 29, conçu pour recevoir le message assemblé, où le message assemblé contient des données indiquant que le récepteur radio devrait exécuter une resynchronisation lors de la réception de la séquence de resynchronisation suivante.

31. Récepteur radio mobile selon l'une quelconque des revendications 25 à 29, conçu pour recevoir le message assemblé, où le message assemblé contient des données indiquant qu'il y a un retard de synchronisation de N trames.
